# EUROPÄISCHE PATENTSCHRIFT

(11) **EP 2 481 528 B1**
(45) Veröffentlichungstag und Bekanntmachung des Hinweises auf die Patenterteilung: **14.10.2015**
(21) Anmeldenummer: 12152268.4
(22) Anmeldetag: 24.01.2012
(51) Int. Cl.: B25J 9/04

(54) **Montagesystem und Positioniervorrichtung eines Montagesystems**
Installation system and positioning device of an installation system
Système de montage et dispositif de positionnement d'un système de montage

(30) Priorität: 26.01.2011 DE 202011001965 U
(43) Veröffentlichungstag der Anmeldung: 01.08.2012
(73) Patentinhaber: KUKA Roboter GmbH, 86165 Augsburg (DE)
(72) Erfinder: Bohlken, Wolfgang, 86456 Gablingen (DE); Markert, Joachim, 86163 Augsburg (DE); Reiss, Christian, 86179 Augsburg (DE); Mayer, Wolfgang, 86179 Augsburg (DE)
(74) Vertreter: Patentanwälte Funk & Böss GbR

(56) Entgegenhaltungen:
- EP-A2- 1 225 495
- DE-A1-102008 023 836
- JP-A- 2000 210 889
- JP-U- 62 058 186

## Beschreibung

Die Erfindung betrifft ein Montagesystem mit mehreren Positioniervorrichtungen.

Die EP 1 225 495 A2 offenbart ein Montagesystem zum Montieren eines Fahrzeugs. Das Montagesystem ist Teil einer Fertigungsstraße und umfasst mehrere Positionierer, die mit Endeffektoren versehen sind, mittels derer z.B. die Karosserie des Fahrzeugs gehalten werden kann. Jede Positioniervorrichtung umfasst mehrere, hintereinander angeordnete Glieder, die relativ zueinander bezüglich Bewegungsachsen bewegbar sind.

Die DE 10 2008 023 836 A1 und die JP 62 58186 offenbaren jeweils einen SCARA Roboter und die JP 2000 210889 offenbart einen Industrieroboter, welcher es erlaubt, die Orientierung eines Befestigungsflansches relativ zu einem Grundgestell konstant zu belassen.

Aufgabe der Erfindung ist es, eine verbesserte Positioniervorrichtung eines Montagesystems anzugeben.

Die Aufgabe wird gelöst durch ein Montagesystem gemäß dem Anspruch 1.

Die Positioniervorrichtungen sind vorgesehen, Teil des erfindungsgemäßen Montagesystems zu sein. Insbesondere sind die Positioniervorrichtungen vorgesehen, ein Bauteil, insbesondere eine Karosserie eines Fahrzeugs zu positionieren, insbesondere zu heben. Um dies zu realisieren, ist am vierten Glied eine Haltevorrichtung zum Halten eines Bauteils befestigt oder befestigbar. Um das Bauteil zu heben, kann das vierte Glied der Positioniervorrichtung längs der dritten Achse mittels des dritten Antriebs linear verschoben werden.

Erfindungsgemäß umfasst demnach jede Positioniervorrichtung ein erstes Glied, das sich gemäß einer Ausführungsform der Positioniervorrichtung vertikal erstreckt und/oder fest mit einem Boden verbindbar ist, und ein zweites Glied, das relativ zum ersten Glied bezüglich der ersten Achse mittels des ersten Antriebs drehbar ist. Das dritte Glied ist ebenfalls drehbar bezüglich einer vertikalen Achse gelagert und das vierte Glied kann bezüglich der dritten Achse linear verschoben werden. Aufgrund dieses Aufbaus ist es möglich, dass im Betrieb der Positioniervorrichtung lediglich das vierte Glied in seiner Höhe verstellt wird, das zweite Glied jedoch in seiner Höhe verbleibt. Dadurch verringert sich der Platzbedarf für das erste, zweite und dritte Glied der Positioniervorrichtung, wodurch das erfindungsgemäße Montagesystem ebenfalls platzsparender ausgeführt werden kann.

Die Antriebe sind z.B. elektrische Antrieb, die z.B. jeweils einen elektrische Motor und gegebenenfalls ein Getriebe umfassen.

Gemäß einer Ausführungsform der Positioniervorrichtung erstreckt sich das zweite Glied horizontal. Dadurch kann das gegebenenfalls am vierten Glied angeordnete Werkzeug innerhalb eines größeren Arbeitsplatzes horizontal bewegt werden.

Nach Ausführungsformen der Positioniervorrichtung kann das zweite Glied bezüglich der ersten Achse drehbar am ersten Glied gelagert sein und/oder das dritte Glied bezüglich der zweiten Achse drehbar am zweiten Glied gelagert sein und/oder das vierte Glied am dritten Glied verschieblich entlang der dritten Achse gelagert sein.

Um das vierte Glied mittels des dritten Antriebs längs der dritten Achse linear verschieben zu können, kann gemäß einer Variante der Positioniervorrichtung das dritte Glied und das vierte Glied ein Zahnstangengetriebe umfassen. Dies kann relativ preiswert realisiert werden.

Das Zahnstangengetriebe kann eine am dritten Glied angeordnete Führung und eine in der Führung geführte und am vierten Glied angeordnete Zahnstange aufweisen.

Insbesondere kann es nach einer Variante der Positioniervorrichtung vorgesehen sein, dass das dritte Glied und das vierte Glied eine Hubvorrichtung bilden. Diese Hubvorrichtung kann vorzugsweise das Zahnstangengetriebe aufweisen.

Die Positioniervorrichtungen sind jeweils derart ausgeführt, dass bei einer Bewegung des zweiten Glieds relativ zur ersten Achse und/oder des dritten Glieds relativ zur zweiten Achse die Orientierung der Haltevorrichtung unverändert bleibt. Somit wird es für das erfindungsgemäße Montagesystem ermöglicht, dass wenn mehrere Positioniervorrichtungen ein Bauteil halten, dieses horizontal mittels der Positioniervorrichtungen bewegt werden kann.

Gemäß einer Variante der Positioniervorrichtung kann es vorgesehen sein, dass das dritte Glied einen relativ zur zweiten Achse mittels des zweiten Antriebs bewegbaren Ausleger und ein bezüglich der dritten Achse oder bezüglich einer weiteren vertikal ausgerichteten Achse drehbar gelagertes Teilglied aufweist, an dem das vierte Glied bezüglich der dritten Achse verschieblich gelagert ist. Der Ausleger kann am zweiten Glied bezüglich der zweiten Achse drehbar gelagert sein.

Damit bei einer Bewegung des zweiten Glieds relativ zur ersten Achse und/oder des dritten Glieds relativ zur zweiten Achse die Orientierung des insbesondere am vierten Glied angeordneten Werkzeugs unverändert bleibt, kann die Positioniervorrichtung einen Riementrieb aufweisen, der mit dem ersten Glied, dem zweiten Glied, dem Ausleger und dem Teilglied entsprechend zusammenwirkt.

Mittels der Positioniervorrichtung wird demnach je nach Ausführungsform und Anwendung ein Positionierer als flexible Bodenspanntechnik bereit gestellt. Beispielsweise in Fertigungslinien der Automobilindustrie sind so genannt Hubshuttle üblich. Mittels der Hubshuttle wird z.B. eine Fahrzeugkarosse von einer Bearbeitungsstation zur nächsten gefördert und in der Bearbeitungsstation angehoben. Mittels der Positioniervorrichtungen kann die Anhebung der Karossen erfolgen.

Je nach Ausführungsform der Positioniervorrichtung kann eine Vereinfachung eines Hubshuttle-System erfolgen, sodass insbesondere die Shuttles leichter und einfacher aufgebaut sein können, um beispielsweise Antriebsenergie im Betrieb zu sparen. Es kann auch vorgesehen sein, mehrere Karossentypen in einem Shuttle zu bearbeiten, ohne dass neue Hebevorrichtungen für diese angefertigt werden müssen. Des Weiteren kann es aufgrund der Positioniervorrichtungen ermöglicht werden, die Stationen, an denen die Karossen angehoben und bearbeitet werden, platzsparender auszulegen.

Je Karosse können beispielsweise bis zu sechs Positioniervorrichtungen eingesetzt und beispielsweise über eine frei programmierbare Steuerung angesteuert werden. Somit können die verschiedensten Positionen innerhalb des Arbeitsbereiches angefahren werden.

Ein Ausführungsbeispiel der Erfindung ist exemplarisch in den beigefügten schematischen Figuren dargestellt. Es zeigen:
- Fig. 1 bis 4: verschiedene Ansichten einer Positioniervorrichtung in perspektivischen Darstellungen,
- Fig. 5 bis 7: verschiedene Seitenansichten der Positioniervorrichtung,
- Fig. 8: eine Draufsicht der Positioniervorrichtung und
- Fig. 9: die Positioniervorrichtung in einer teilweise geöffneten Darstellung.

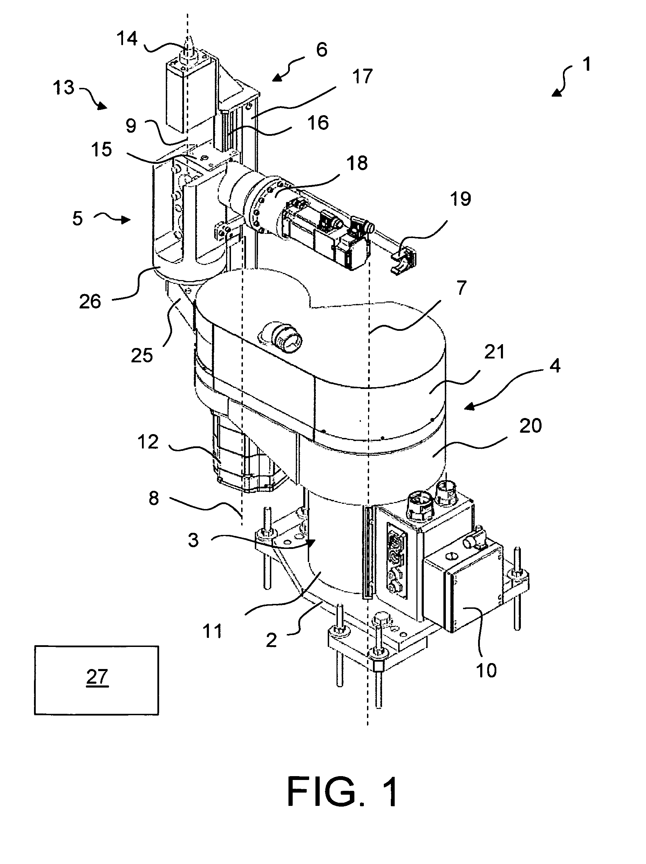

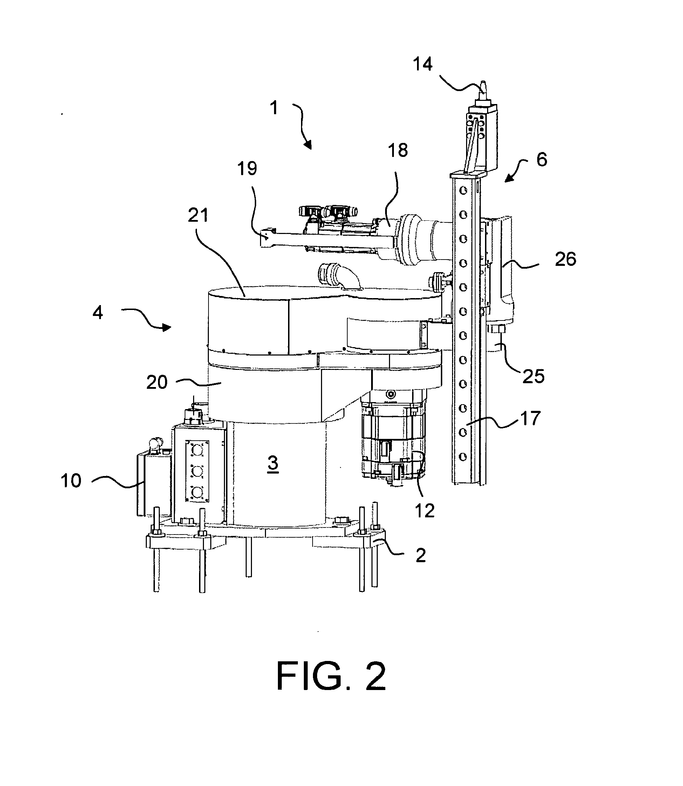

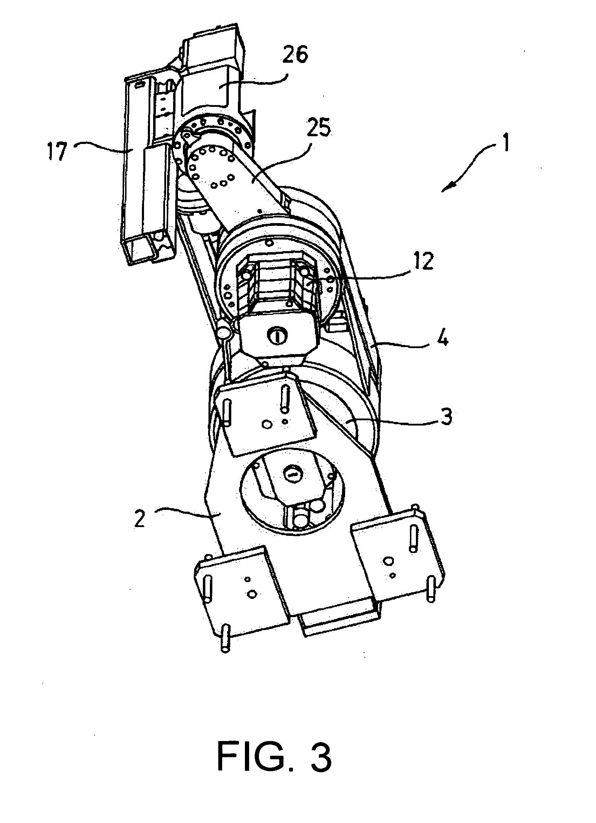

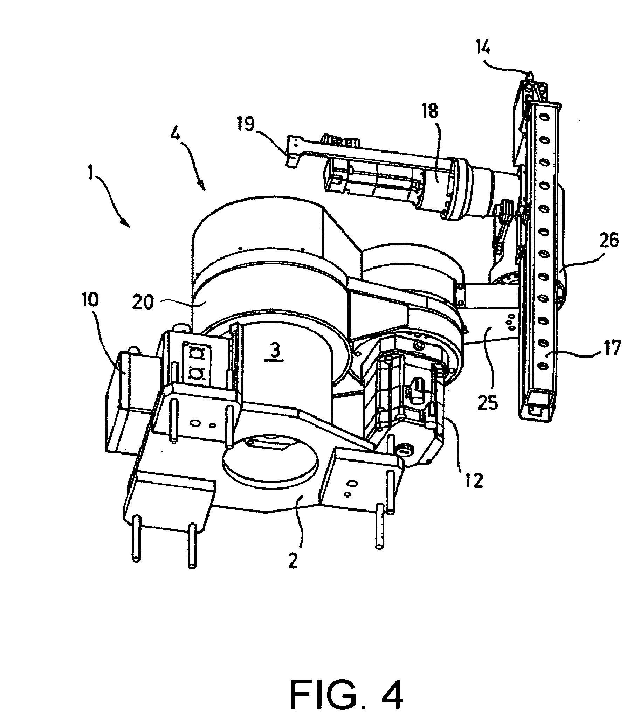

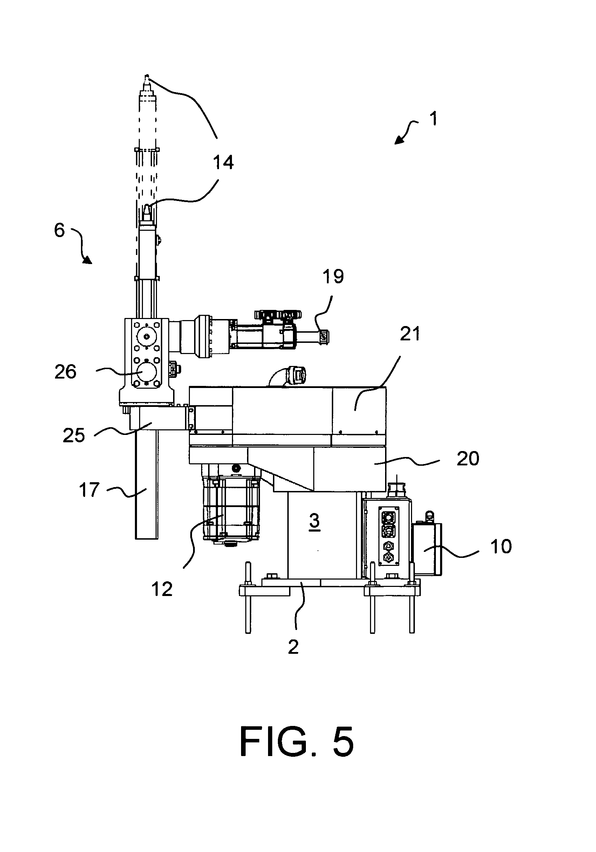

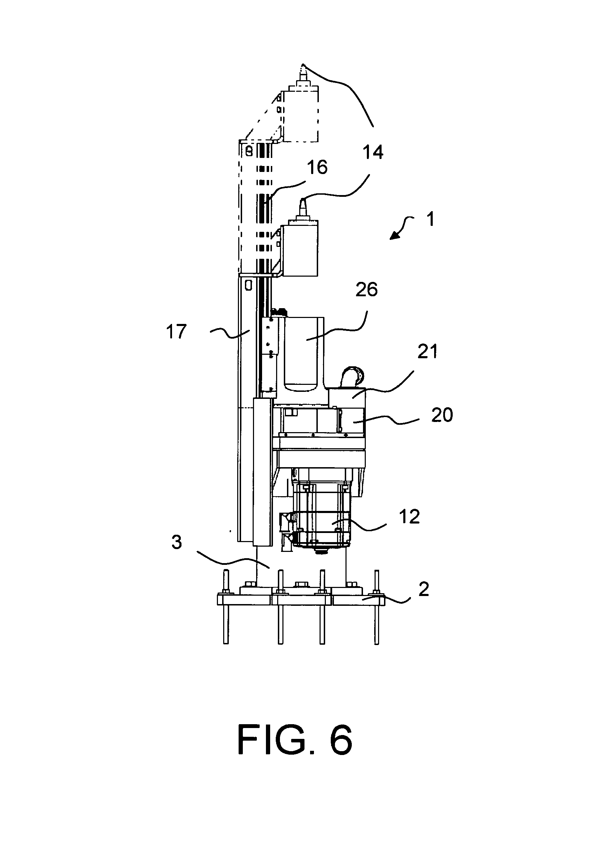

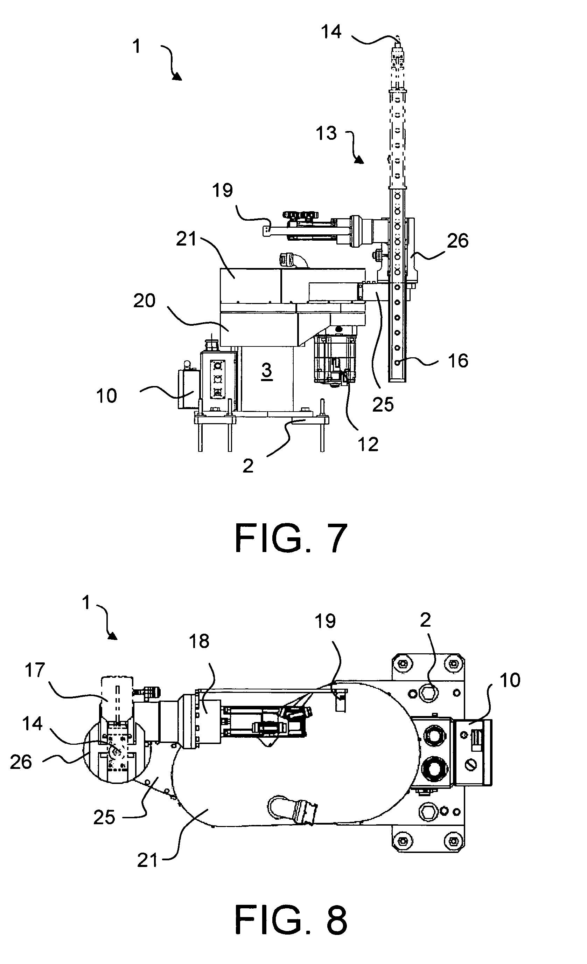

Die Figuren 1 bis 4 zeigen eine Positioniervorrichtung 1 eines erfindungsgemäßen Montagesystems zum Montieren eines Fahrzeugs in perspektivischen Darstellungen. Die Figuren 5 bis 7 zeigen verschiedene Seitenansichten der Positioniervorrichtung 1 und die Fig. 8 zeigt eine Draufsicht der Positioniervorrichtung 1.

Das Montagesystem ist insbesondere Teil einer Fertigungsstraße und umfasst mehrere Positioniervorrichtungen 1, welche mittels einer Steuervorrichtung 27 angesteuert werden. Mittels der Positioniervorrichtungen 1 kann insbesondere eine Karosserie des Fahrzeugs gehalten und für eine Verarbeitung ausgerichtet werden.

Die Positioniervorrichtung 1 weist im Falle des vorliegenden Ausführungsbeispiels eine Bodenplatte 2 auf, mittels derer die Positioniervorrichtung 1 z. B. am Boden oder an einem sogenannten Shuttle befestigt werden kann. Die Bodenplatte 2 kann z.B. mit dem Boden oder dem Shuttle verschraubt werden.

Im Falle des vorliegenden Ausführungsbeispiels weist die Positioniervorrichtung 1 mehrere, hintereinander angeordnete Glieder auf, welche bezüglich Achsen 7-9 relativ zueinander beweglich sind. Insbesondere umfasst die Positioniervorrichtung 1 ein sich vertikal erstreckendes und starr mit der Bodenplatte 2 verbundenes erstes Glied 3, ein als Ausleger 4 ausgeführtes, sich horizontal erstreckendes und bezüglich der als Drehachse ausgeführten Achse 7 drehbar gelagertes zweitens Glied, ein bezüglich der als weitere Drehachse ausgeführten Achse 8 relativ zum Ausleger 4 drehbar gelagertes drittes Glied 5, und ein bezüglich einer als Linearachse ausgeführten Achse 9 vertikal verschiebbares viertes Glied 6.

Die Positioniervorrichtung 1 weist z.B. elektrische Antriebe und gegebenenfalls Getriebe zum Bewegen der Glieder auf, die beispielsweise über eine Anschlussvorrichtung 10 mit der Steuervorrichtung 27 verbunden sind. Die Steuervorrichtung 27 steuert im Betrieb die elektrischen Antriebe der Positioniervorrichtung 1 in geeigneter Weise an.

Der elektrische Motor und gegebenenfalls ein diesem Motor zugeordnetes Getriebe zum Bewegen des Auslegers 4 relativ zum ersten Glied 3 sind beispielsweise innerhalb eines Gehäuses 11 des ersten Glieds 3 angeordnet. Der das dritte Glied 5 relativ zum Ausleger 4 bewegende elektrische Motor ist in den Figuren mit dem Bezugszeichen 12 versehen.

Im Falle des vorliegenden Ausführungsbeispiels bilden das dritte Glied 5 und das vierte Glied 6 eine Hubvorrichtung 13, mittels derer ein Werkzeug, insbesondere ein Dorn 14 längs der Achse 9 vertikal verschoben werden kann. Der Dorn 14 bzw. die Dorne 14 des Montagesystems sind vorgesehen, in die zu bearbeitende Karosserie einzugreifen, um diese insbesondere zu heben bzw. zu senken.

Die Hubvorrichtung 13 umfasst im Falle des vorliegenden Ausführungsbeispiels eine Antriebseinheit mit integrierter Führung 15, die Teil des dritten Glieds 5 ist, und eine innerhalb der Führung 15 verschieblich gelagerte Zahnstange 16. Die Zahnstange 16, die Teil des vierten Glieds 6 ist, ist fest mit einer Schiene 17, die wiederum Teil des vierten Glieds 6 ist, verbunden. An der Schiene 17 ist der Dorn 14 befestigt. Die Schiene 17 und die Zahnstange 16 bilden somit ein Zahnstangengetriebe.

Die Hubvorrichtung 13 umfasst im Falle des vorliegenden Ausführungsbeispiels einen elektrischen Antrieb, dessen elektrischer Motor 18 am dritten Glied 5 befestigt ist und mittels eines nicht näher dargestellten Getriebes die Zahnstange 16 und somit die Schiene 17 und den Dorn 14 längs der Achse 9 verschieben kann. In den Figuren 5-7 ist die Hubvorrichtung 13 bzw. der Dorn 14 in zwei verschiedenen Hubhöhen gezeigt und zwar in seiner tiefsten Stellung und in seiner höchsten Stellung (gestrichelt gezeichnet).

Eine als Klammer 19 ausgeführte Befestigungsvorrichtung für elektrische Anschlüsse des Motors 18 ist ebenfalls in den Figuren zu sehen.

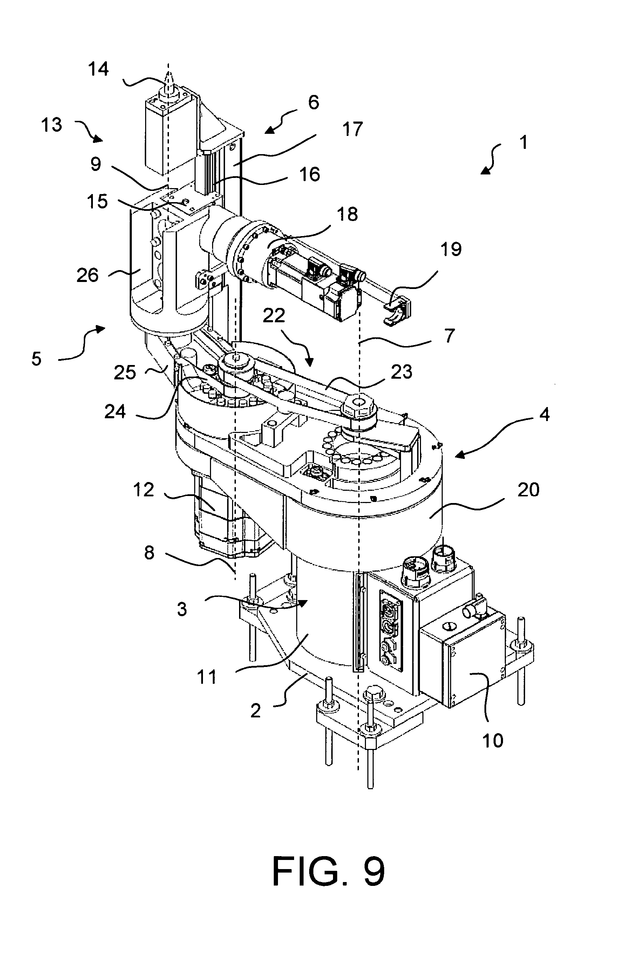

Im Falle des vorliegenden Ausführungsbeispiels umfasst der Ausleger 4 ein Gehäuse 20 und einen Deckel 21. Die Figur 9 zeigt die Positioniervorrichtung 1 mit entferntem Deckel 21 in einer perspektivischen Darstellung.

Im Falle des vorliegenden Ausführungsbeispiels ist die Positioniervorrichtung 1 derart ausgeführt, dass bei einer Bewegung des Auslegers 4 relativ zur Achse 7 und/oder des dritten Glieds 5 relativ zur Achse 8 die Orientierung des Dorns 14 unverändert bleibt. Dazu umfasst die Positioniervorrichtung 1 einen in der Figur 9 gezeigten Riementrieb 22, der beispielsweise Riemen 23, 24 umfasst und bei geschlossenem Deckel 21 gegen Berührung geschützt ist. Außerdem umfasst im Falle des vorliegenden Ausführungsbeispiels das dritte Glied 5 einen sich horizontal erstreckenden Ausleger 25 und ein sich vertikal erstreckendes Teilglied 26, an dem die Führung 15 befestigt ist. Der Ausleger 25 des dritten Glieds 5 ist drehbar bezüglich der Achse 8 gelagert und das Teilglied 26 ist drehbar am Ausleger 25 des dritten Glieds 5 bezüglich der Achse 9 oder bezüglich einer weiteren vertikal verlaufenden Achse gelagert. Der Riementrieb 22 wiederum wirkt mit dem als zweites Glied ausgeführten Ausleger 4, dem Ausleger 25 des dritten Glieds 5 und dem Teilglied 26 derart zusammen, dass bei einer Bewegung des als zweites Glied ausgeführten Auslegers 4 relativ zur Achse 7 und/oder des Auslegers 25 des dritten Glieds 5 relativ zur Achse 8 die Orientierung des Dorns 14 unverändert bleibt.

## Patentansprüche

1. Montagesystem, aufweisend mehrere Positioniervorrichtungen und eine Steuervorrichtung (27) zum Ansteuern der Antriebe (12, 18) der einzelnen Positioniervorrichtungen (1), wobei jede der Positioniervorrichtungen (1)
- ein erstes Glied (3),
- ein dem ersten Glied (3) nachfolgendes zweites Glied (4), das mittels eines ersten Antriebs der Positioniervorrichtung (1) bezüglich einer vertikal ausgerichteten ersten Achse (7) drehbar ist,
- ein dem zweiten Glied (4) nachfolgendes drittes Glied (5), das mittels eines zweiten Antriebs (12) der Positioniervorrichtung (1) bezüglich einer vertikal ausgerichteten zweiten Achse (8) drehbar ist, und
- ein dem dritten Glied (5) nachfolgendes viertes Glied (6), das mittels eines dritten Antriebs (18) der Positioniervorrichtung (1) entlang einer vertikal ausgerichteten dritten Achse (9) linear verschiebbar ist und an dem eine Haltevorrichtung (14) zum Halten eines Bauteils befestigt oder befestigbar ist,
aufweist,
wobei die Positioniervorrichtungen (1) derart ausgeführt sind, dass bei einer Bewegung der entsprechenden zweiten Glieder (4) relativ zu den entsprechenden ersten Achsen (7) und/oder der entsprechenden dritten Glieder (5) relativ zu den entsprechenden zweiten Achsen (8) die Orientierungen der Haltevorrichtungen unverändert bleiben.

2. Montagesystem nach Anspruch 1, bei dem sich das erste Glied (3) der einzelnen Positioniervorrichtungen (1) vertikal erstreckt und/oder fest mit einem Boden verbindbar ist.

3. Montagesystem nach Anspruch 1 oder 2, bei dem sich das zweite Glied (4) der einzelnen Positioniervorrichtungen (1) horizontal erstreckt und/oder bezüglich der entsprechenden ersten Achse (7) drehbar am entsprechenden ersten Glied (3) gelagert ist.

4. Montagesystem nach einem der Ansprüche 1 bis 3, bei dem das dritte Glied (5) der einzelnen Positioniervorrichtungen (1) bezüglich der entsprechenden zweiten Achse (8) drehbar am entsprechenden zweiten Glied (4) gelagert ist.

5. Montagesystem nach einem der Ansprüche 1 bis 4, bei dem das vierte Glied (6) der einzelnen Positioniervorrichtungen (1) am entsprechenden dritten Glied (5) verschieblich entlang der entsprechenden dritten Achse (9) gelagert ist.

6. Montagesystem nach einem der Ansprüche 1 bis 5, bei dem das dritte Glied (5) und das vierte Glied (6) der einzelnen Positioniervorrichtungen (1) jeweils ein Zahnstangengetriebe (15, 16) umfassen, um das entsprechende vierte Glied (5) mittels des entsprechenden dritten Antriebs (18) längs der entsprechenden dritten Achse (9) linear zu verschieben.

7. Montagesystem nach Anspruch 6, bei dem die Zahnstangengetriebe jeweils eine am entsprechenden dritten Glied (5) angeordnete Führung (15) und eine in der Führung (15) geführte und am entsprechenden vierten Glied (6) angeordnete Zahnstange (16) aufweisen.

8. Montagesystem nach einem der Ansprüche 1 bis 7, bei dem das dritte Glied (5) und das vierte Glied (6) der einzelnen Positioniervorrichtungen (1) jeweils eine Hubvorrichtung (13) bilden.

9. Montagesystem nach Anspruch 8, dem das dritte Glied (5) der einzelnen Positioniervorrichtungen (1) jeweils einen relativ zur entsprechenden zweiten Achse (8) mittels des entsprechenden zweiten Antriebs (12) bewegbaren Ausleger (25) und ein bezüglich der entsprechenden dritten Achse (9) oder einer weiteren vertikal ausgerichteten Achse drehbar gelagertes Teilglied (25) aufweist, an dem das entsprechende vierte Glied (6) bezüglich der entsprechenden dritten Achse (9) verschieblich gelagert ist.

10. Montagesystem nach Anspruch 9, bei dem der der Ausleger (25) der einzelnen Positioniervorrichtungen (1) jeweils am entsprechenden zweiten Glied (4) bezüglich der entsprechenden zweiten Achse (8) drehbar gelagert ist.

11. Montagesystem nach Anspruch 9 oder 10, bei dem jede der Positioniervorrichtungen (1) jeweils einen Riementrieb (22) aufweist, der mit dem entsprechenden ersten Glied (3), dem entsprechenden zweiten Glied (4), dem entsprechenden Ausleger (25) und dem entsprechenden Teilglied (26) derart zusammenwirkt, dass bei einer Bewegung des entsprechenden zweiten Glieds (4) relativ zur entsprechenden ersten Achse (7) und/oder des entsprechenden dritten Glieds (5) relativ zur entsprechenden zweiten Achse (8) die Orientierung der Haltevorrichtung (14) unverändert bleibt.

## Claims

1. Assembly system, comprising a plurality of positioning devices and a control system (27) for controlling the drives (12, 18) of the individual positioning devices (1), wherein each of the positioning devices (1) comprises
- a first member (3),
- a second member (4) following the first member (3), said second member being rotatable by means of a first drive of the positioning device (1) relative to a vertically aligned first axis (7),
- a third member (5) following the second member (4), which third member can be rotated by means of a second drive (12) of the positioning device (1) relative to a vertically aligned second axis (8), and
- a fourth member (6) following the third member (5), which fourth member can be displaced linearly by means of a third drive (18) of the positioning device (1) along a vertically aligned third axis (9) and can be secured or is able to be secured to a holding device (14) for holding a component,
wherein the positioning devices (1) are designed such that during a movement of the corresponding second members (4) relative to the corresponding first axes (7) and/or the corresponding third members (5) relative to the corresponding second axes (8) the orientations of the holding devices remain unchanged.

2. Assembly system according to claim 1, in which the first member (3) of the individual positioning devices (1) extends vertically and/or can be connected securely to a base.

3. Assembly system according to either claim 1 or claim 2, in which the second member (4) of the individual positioning devices (1) extends horizontally and/or is mounted relative to the corresponding first axis (7) rotatably on the corresponding first member (3).

4. Assembly system according to any one of claims 1 to 3, in which the third member (5) of the individual positioning devices (1) is mounted rotatably on the corresponding second member (4) relative to the corresponding second axis (8).

5. Assembly system according to any one of claims 1 to 4, in which the fourth member (6) of the individual positioning devices (1) is mounted displaceably on the corresponding third member (5) along the corresponding third axis (9).

6. Assembly system according to any one of claims 1 to 5, in which the first member (5) and the fourth member (6) of the individual positioning devices (1) each comprise a rack and pinion gear (15, 16), in order to linearly displace the corresponding fourth mem-2 ber (5) by means of the corresponding third drive (18) along the corresponding third axis (9).

7. Assembly system according to claim 6, in which the rack and pinion gear comprises a guide (15) arranged on the corresponding third member (5) and a rack and pinion (16) guided in the guide (15) and arranged on the corresponding fourth member (6).

8. Assembly system according to any one of claims 1 to 7, in which the third member (5) and the fourth member (6) of the individual positioning devices (1) each form a lifting device (13).

9. Assembly system according to claim 8, in which the third member (5) of the individual positioning devices (1) comprises an extension arm (25) movable relative to the corresponding second axis (8) by means of the corresponding second drive (12) and a part member (25) mounted rotatably relative to the corresponding third axis (9) or an additional vertically aligned axis, on which part member the corresponding fourth member (6) is mounted displaceably relative to the corresponding third axis (9).

10. Assembly system according to claim 9, in which the extension arm (25) of the individual positioning devices (1) is mounted rotatably on the corresponding second member (4) relative to the corresponding second axis (8).

11. Assembly system according to claim 9 or 10, in which each of the positioning devices (1) each comprises a belt drive (22) which cooperates with the corresponding first member (3), the corresponding second member (4), the corresponding extension arm (25) and the corresponding part member (26) such that during a movement of the corresponding second member (4) relative to the corresponding first axis (7) and/or the corresponding third member (5) relative to the corresponding second axis (8) the orientation of the holding device (14) remains unchanged.

## Revendications

1. Système de montage présentant plusieurs dispositifs de positionnement et un dispositif de commande (27) pour piloter les entraînements (12, 18) des différents dispositifs de positionnement (1), chacun des dispositifs de positionnement (1) présentant
- un premier élément (3),
- un deuxième élément (4) suivant le premier élément (3), lequel est rotatif, au moyen d'un premier entraînement du dispositif de positionnement (1) par rapport un premier axe (7) orienté à la verticale,
- un troisième élément (5) suivant le deuxième élément (4), lequel est rotatif au moyen d'un deuxième entraînement (12) du dispositif de positionnement (1) par rapport à un deuxième axe (8) orienté à la verticale, et
- un quatrième élément (6) suivant le troisième élément (5), lequel peut être déplacé, au moyen d'un troisième entraînement (18) du dispositif de positionnement (1), linéairement le long d'un troisième axe (9) orienté à la verticale et sur lequel est fixé ou peut être fixé un dispositif de maintien (14) pour maintenir un composant,
les dispositifs de positionnement (1) étant réalisés de telle sorte que lors d'un mouvement des deuxièmes éléments (4) correspondants par rapport aux premiers axes (7) correspondants et/ou des troisièmes éléments (5) par rapport aux deuxièmes axes (8) correspondants, les orientations du dispositif de maintien restent inchangées.

2. Système de montage selon la revendication 1, dans lequel le premier élément (3) des différents dispositifs de positionnement (1) s'étend à la verticale et/ou peut être relié de manière fixe avec un sol.

3. Système de montage selon la revendication 1 ou 2, dans lequel le deuxième élément (4) des différents dispositifs de positionnement (1) s'étend à l'horizontale et/ou est monté de manière rotative sur le premier élément (3) correspondant par rapport au premier axe (7) correspondant.

4. Système de montage selon l'une des revendications 1 à 3, dans lequel le troisième élément (5) des différents dispositifs de positionnement (1) est monté de manière rotative sur le deuxième élément (4) correspondant par rapport au deuxième axe (8) correspondant.

5. Système de montage selon l'une des revendications 1 à 4, dans lequel le quatrième élément (6) des différents dispositifs de positionnement (1) est monté sur le troisième élément (5) correspondant de manière à pouvoir être déplacé le long du troisième axe (9) correspondant.

6. Système de montage selon l'une des revendications 1 à 5, dans lequel le troisième élément (5) et le quatrième élément (6) des différents dispositifs de positionnement (1) comprennent chacun un engrenage à crémaillère (15, 16) pour déplacer le quatrième élément (5) correspondant linéairement le long du troisième axe (9) correspondant au moyen du troisième entraînement (18) correspondant.

7. Système de montage selon la revendication 6, dans lequel les engrenages à crémaillère présentent chacun un guidage (15) agencé sur le troisième élément (5) correspondant et une crémaillère (16) guidée dans le guidage (15) et agencée sur le quatrième élément (6) correspondant.

8. Système de montage selon l'une des revendications 1 à 7, dans lequel le troisième élément (5) et le quatrième élément (6) des différents dispositifs de positionnement (1) forment chacun un dispositif de levage (13).

9. Système de montage selon la revendication 8, dans lequel le troisième élément (5) des différents dispositifs de positionnement (1) présente un bras (25) mobile par rapport au deuxième axe (8) correspondant au moyen du deuxième entraînement (12) correspondant et un élément partiel (26) monté de manière rotative par rapport au troisième axe (9) correspondant ou un autre axe orienté à la verticale, respectivement.

10. Système de montage selon la revendication 9, dans lequel le bras (25) des différents dispositifs de positionnement (1) est monté de manière rotative sur le deuxième élément (4) correspondant par rapport au deuxième axe (8) correspondant, respectivement.

11. Système de montage selon la revendication 9 ou 10, dans lequel chacun des dispositifs de positionnement (1) présente un entraînement à courroie (22) qui coopère avec le premier élément (3) correspondant, avec le deuxième élément (4) correspondant, avec le bras (25) correspondant et avec l'élément partiel (26) correspondant de telle sorte que lors d'un mouvement du deuxième élément (4) correspondant par rapport au premier axe (7) correspondant et/ou du troisième élément (5) correspondant par rapport au deuxième axe (8), l'orientation du dispositif de maintien (14) reste inchangée.
